# EUROPEAN PATENT APPLICATION

(11) **EP 2 493 059 A1**
(43) Date of publication of application: **29.08.2012**
(21) Application number: 11156221.1
(22) Date of filing: 28.02.2011
(51) Int. Cl.: H02K 7/18, H02K 9/20

(54) **A generator, in particular for a wind turbine**

(71) Applicant: Siemens Aktiengesellschaft, 80333 München (DE)
(72) Inventor: Besnerais, Jean Le, 59370, Mons en Baroeul (FR)

(57) **Abstract**

A generator (10), in particular for a wind turbine, comprising a stator (11) with a lamination (20) and stator coils (14), a rotor (12) with a number of circumferentially arranged permanent magnets (13) and heat pipes (21) with a hot end (23) and a cold end (22) for cooling the rotor (12), whereby the heat pipes (21) are disposed between the permanent magnets (13) of the rotor (12).

## Description

The present invention relates to a generator, in particular for a wind turbine, comprising a stator with a lamination and stator coils, a rotor with a number of circumferentially arranged permanent magnets and heat pipes with a hot end and a cold end for cooling the rotor.

Most of heat losses in electrical machines, in particular for wind turbine generators, come from copper losses. This heat has to be removed in order to avoid hot spots and insulation wearing.

Wind turbines are provided with a rotor shaft which is part of an electrical generator producing electricity during a movement of the rotor relative to the stator of the generator. The stator comprises a number of coils or windings, the rotor comprises a number of permanent magnets so that an electric voltage is induced when the rotor is turned.

During rotation of the rotor a certain amount of heat is generated in the stator. For conventional wind turbines different cooling means are known. It has already been proposed to use an air-cooled ventilation system, a water-cooled system as well as heat pipes.

In an air-cooled ventilation system the stator stack is generally cooled by blowing air through end windings of the stator coils into an airgap between stator and rotor and through stator radial ducts. In a water-cooled or liquid-cooled system pipes are inserted in slots or in hollow copper strands through which a liquid cooling means is pumped.

In EP 1 852 956 A1 an electrical machine with evaporative cooling has been proposed. A cooling liquid flows through windings of the electrical machine wherein the liquid is fed directly through the cooling channels into electrical conductors of the stator winding, wherein the conductor is made up of pulled coils that are wound and formed continuously out of hollows in such a way that an unbroken cooling channel and a continuous electrical conductor are created that a uniformly cooled by the flow of the evaporating fluid, preferably CO₂, both in the iron assembly as well as in the area of the end connections.

In US 2007/0024132 A1 a wind turbine generator has been proposed with a cooling means comprising heat pipes. A heat pipe assembly thermally engages stator or rotor to dissipate heat generated in the stator or the rotor.

In general a heat pipe is a heat transfer device that combines the principles of both thermal conductivity and phase transition to efficiently manage the transfer of heat between two regions. At the hot end of a heat pipe a liquid in contact with a thermally conductive solid surface turns into a vapor by absorbing the heat of that surface. The vapor condenses back into a liquid at the cold end releasing the latent heat. The liquid then returns to the hot end where it evaporates once more and repeats the cycle.

In view of the increasing power output of wind turbine generators an efficient cooling means is necessary.

It is therefore an object of the present invention to provide a generator with an effective cooling means.

According to the present invention this object is achieved in the above defined generator in that the heat pipes are disposed between the permanent magnets of the rotor.

The present invention is based on the idea that a very efficient cooling can be effected by placing the heat pipes on the rotor between the permanent magnets. It has been found out that the local acceleration due to the rotation is quite small and does not interfere the operation of the heat pipe, therefore a conventional heat pipe can still be used on an outer rotor.

In the inventive generator it is preferred that the hot end and/or the cold end is provided with cooling fins. Cooling fins increase the surface so that a larger amount of heat can be dissipated. In the inventive generator it can be envisaged that the hot end of a heat pipe is disposed in an airgap between stator and rotor. Preferably the hot end is disposed at the inner surface of the rotor in the airgap between rotor and stator. Preferably the cold end of a heat pipe is disposed at the outer side of the rotor. Accordingly the cold end of the pipe is directly in contact with ambient air, where the wind blows so that a cooling is effected.

In the inventive generator the cooling fins may be made of a non-magnetic material. Preferably aluminium can be used as non-magnetic material which exhibits a high thermal conductivity without impairing the electromagnetic field.

In order to further improve the cooling of the inventive generator the stator may comprise at least one fan for ventilating the stator and/or the rotor. The fan makes the hot air inside the stator circulate through airducts along a stator lamination and/or airgaps and/or along end windings of stator coils. When the air flows through the airgaps it is continuously cooled down by the heat pipes.

In the inventive generator rotor and stator can be contained in a housing, which is preferably almost airtight. Due to the housing the operation of the fan is very effective as the air flow through the stator and rotor can be controlled exactly.

In the inventive generator it is preferred that plural magnets, which are spaced from each other, are disposed in axial direction of the generator.

The invention and its underlying principle will be better understood when consideration is given to the following description of a preferred embodiment.

In the accompanying drawings:
- fig. 1: is a sectional view of a heat pipe;
- fig. 2: is a sectional view of an inventive generator; and
- fig. 3: is another sectional view of the generator; perpen-dicular to the view of fig. 2.

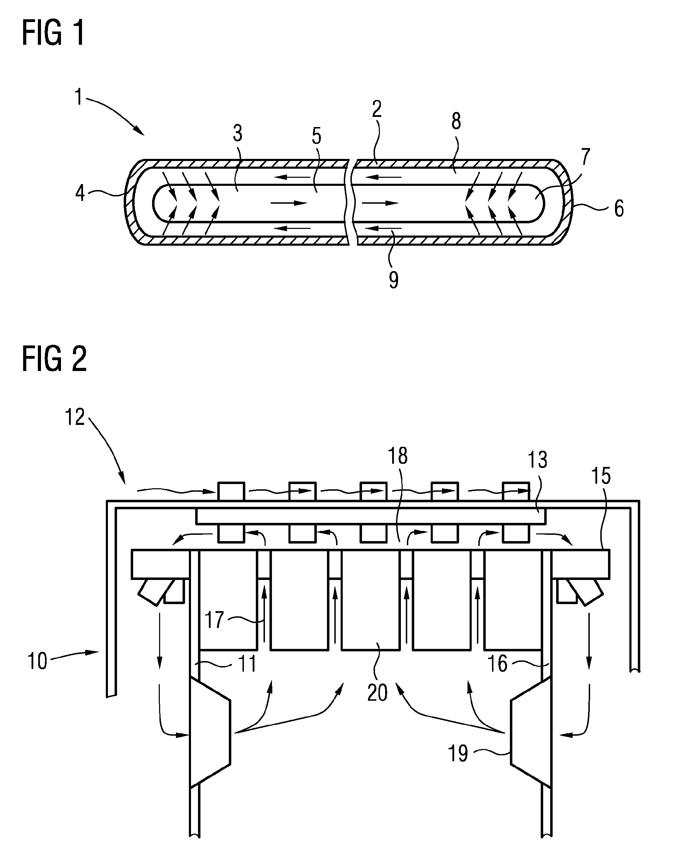

Fig. 1 is a sectional view of a heat pipe 1, the heat pipe thermal cycle is as follows: heat pipe 1 comprises a closed tube 2, which is evacuated and filled with a certain amount of a working fluid. Due to the partial vacuum that is near or below the vapor pressure of the fluid some of the fluid will be in the liquid phase and some will be in the gas phase. As shown in fig. 1 working fluid 3 evaporates to vapor absorbing thermal energy at the hot end 4. In the centre of the heat pipe 1 vapor 5 migrates along the cavity to the cold end 6.
Near the cold end 6 vapor condenses back to fluid 7 and is absorbed by a wick 8 releasing thermal energy. Arrow 9 indicates that working fluid flows back to the hot end 4.

Fig. 2 is a sectional view of a generator 10 for a wind turbine. Generator 10 comprises a stator 11 and a rotor 12.
Typically stator 11 is incorporated in a nacelle which is positioned on top of a tower of a wind turbine. Rotor blades are directly connected to rotor 12 which is rotatably movable around the stator 11. Permanent magnets 13 are arranged in circumferential direction at the inner surface of rotor 12.

Stator 11 comprises stator coils 14, end windings 15 and finger plates 16. Air flows through airducts 17 and further through an airgap 18 which is formed between stator 11 and rotor 12. Stator 11 comprises a number of fans 19 so that hot air is circulated through airducts 17 along stator lamination 20, stator coils 14 and the airgap 18.

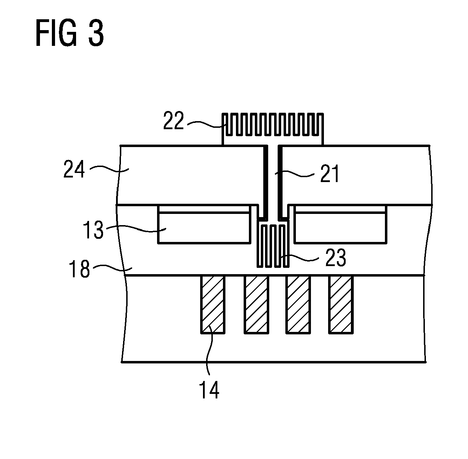

Heat pipes 21 are disposed on rotor 12. As can be seen best in fig. 3 which is perpendicular to fig. 2 heat pipes 21 are disposed between neighbouring magnets 13. Each heat pipe 21 comprises a cold end 22 and a hot end 23. Both ends 22, 23 are provided with fins which increase the surface. The hot end 23 of heat pipe 21 is heated by internal air flow inside stator 11. The cold end 22 is cooled outside rotor 12 by the ambient wind. The outer shape of heat pipe 21 is adapted to the shape of a rotor yoke 24 on which the magnets 13 are fixed to. The generator 10 allows a cooling of a wind turbine with an outer rotor 12, therefore it is suitable for offshore applications. As the internal air flows completely closed the inner temperature can be controlled by the operation of fans 19. Fans 19 can also work in the upper direction, i.e. sucking the air through airducts 17, however, in this case the air going through end windings 15 will be hotter.

## Claims

1. A generator (10), in particular for a wind turbine, comprising a stator (11) with a lamination (20) and stator coils (14), a rotor (12) with a number of circumferentially arranged permanent magnets (13) and heat pipes (21) with a hot end (23) and a cold end (22) for cooling the rotor (12), **characterised in that** the heat pipes (21) are disposed between the permanent magnets (13) of the rotor (12).

2. A generator according to claim 1, **characterised in that** the hot end (23) and/or the cold end (22) is provided with cooling fins.

3. A generator according to claim 1 or 2, **characterised in that** the hot end (23) of a heat pipe (21) is disposed in an airgap (18) between stator (11) and rotor (12).

4. A generator according to any of the preceding claims, **characterized in that** the cold end (22) of a heat pipe (21) is disposed at the outer side of the rotor (12).

5. A generator according to any of claims 2 to 4, **characterised in that** the cooling fin is made of a non-magnetic material.

6. A generator according to any of claims 2 to 5, **characterised in that** a cooling fin is made of aluminium.

7. A generator according to any of the preceding claims, **characterised in that** the stator (11) comprises at least one fan (19) for ventilating the stator (11) and/or the rotor (12).

8. A generator according to claim 7, **characterized in that** the fan (19) is operated such that air is circulated through airducts (17) along a stator lamination (20) and/or an airgap (18) and/or end windings (15) of stator coils (14).

9. A generator according to any of the preceding claims, **characterised in that** rotor (12) and stator (11) are contained in a housing, which is preferably almost airtight.

10. A generator according to any of the preceding claims, **characterised in that** plural magnets (13), which are spaced from each other, are disposed in axial direction of the generator (10).
